# EUROPÄISCHE PATENTSCHRIFT

(11) **EP 2 677 614 B1**
(45) Veröffentlichungstag und Bekanntmachung des Hinweises auf die Patenterteilung: **17.09.2014**
(21) Anmeldenummer: 12172794.5
(22) Anmeldetag: 20.06.2012
(51) Int. Cl.: H02G 3/08, H02G 3/14

(54) **Gehäuse zur Aufnahme eines Anhängermoduls**
Housing for containing a trailer module
Boîtier destiné à la réception d'un module de suspension

(43) Veröffentlichungstag der Anmeldung: 25.12.2013
(73) Patentinhaber: Mkem, Spol s.r.o., 06401 Stara Lubovna (SK)
(72) Erfinder: Krajger, Frantisek, 06401 Hniezdne (SK); Wystron, Alexander, 6003 Luzern (CH)
(74) Vertreter: Stenger, Watzke & Ring

(56) Entgegenhaltungen:
- EP-A1- 0 692 396
- US-A1- 2003 020 331
- US-A1- 2003 136 780

## Beschreibung

Die Erfindung betrifft ein Gehäuse zur Aufnahme eines Anhängermoduls.

Anhängermodule, auch Anhängeranschlussgeräte genannt, sind aus dem Stand der Technik an sich bekannt. Sie stellen die Schaltungsanordnung bereit, die für eine elektrische und/oder elektronische Kontaktierung eines Anhängers mit einem Zugfahrzeug erforderlich ist.

Anhängermodule sind in vielfacher Ausgestaltungsform aus dem Stand der Technik bekannt, weshalb an dieser Stelle nur beispielhaft auf die EP 2 390 140 A2, die DE 10 2004 045 435 A1, die EP 1 653 782 A1 die US 2003 0020331 und die DE 44 24 471 C2 verwiesen werden soll.

Anhängermodule der vorgenannten Art werden typischerweise vor Spritzwasser geschützt in einem vom Zugfahrzeug bereitgestellten Aufnahmeraum angeordnet, beispielsweise im Kofferraum. Es gibt aber auch Anwendungsfälle, die eine spritzwassergeschützte Anordnung des Anhängermoduls im Zugfahrzeug nicht gestatten. In diesen Fällen kommt ein separates Gehäuse zum Einsatz, das der spritzwassergeschützten Aufnahme des Anhängermoduls dient. Ein solches Gehäuse wird zumeist zugkraftfahrzeugseitig angeordnet und ist den im bestimmungsgemäßen Verwendungsfall auftretenden Witterungseinflüssen ausgesetzt. Das Gehäuse erfüllt mithin zwei Funktionen. Es dient zum einen der Aufnahme und Anordnung des Anhängermoduls am Zugfahrzeug, zum anderen stellt es für das Anhängermodul einen Schutz vor Witterungseinflüssen, insbesondere Wasser dar. Ein ordnungsgemäßer Betrieb des Anhängermoduls soll so gewährleistet werden.

Die vorbekannten Gehäuse zur Aufnahme eines Anhängermoduls haben sich im alltäglichen Praxiseinsatz zwar bewährt, doch sind sie nicht ohne Nachteil. So ist nach wie vor die Dichtigkeit des Gehäuses vor einem Wassereintrag ein Problem. Insbesondere altersbedingte Materialermüdungen können zu Gehäuseundichtigkeiten führen, was dann infolge eines Wassereintrags zu einem Kurzschluss im Anhängermodul führen kann. Darüber hinaus ist die Gehäusemontage zum Teil recht aufwendig, insbesondere deshalb, um eine zumindest anfängliche Dichtigkeit gegenüber Wassereintrag sicher gewährleisten zu können.

Es ist deshalb ausgehend vom vorbenannten Stand der Technik die Aufgabe der Erfindung, ein Gehäuse zur Aufnahme eines Anhängermoduls bereitzustellen, das bei gleichzeitig einfacher Montage eine dauerhafte zuverlässige Dichtigkeit gegenüber Wasser gewährleistet.

Zur Lösung dieser Aufgabe wird mit der Erfindung vorgeschlagen ein Gehäuse zur Aufnahme eines Anhängermoduls, mit einer Gehäusekammer, die zur Aufnahme des Anhängermoduls einen Volumenraum bereitstellt, mit einem Gehäusedeckel, der eine Tülle aufweist, wobei der Gehäusedeckel und die Tülle einstückig aus einem elastischen Kunststoffmaterial gebildet sind, und mit einem Haltering, der gehäusekammerseitig Rasthaken trägt, wobei die Gehäusekammer gehäusedeckelseitig einen umlaufenden Anschlag aufweist, der zu den Rasthaken des Halterings korrespondierende Vertiefungen trägt und wobei der Gehäusedeckel gehäusekammerseitig einen umlaufenden und zum Anschlag des Gehäusedeckels korrespondierend ausgebildeten Ansatzflansch aufweist.

Das Gehäuse nach der Erfindung verfügt über drei Hauptkomponenten. Es sind eine Gehäusekammer, eine Gehäusedeckel sowie ein Haltering vorgesehen. Dabei dient der Haltering der wasserdicht anliegenden Anordnung des Gehäusedeckels an der Gehäusekammer.

Die Gehäusekammer ist aus einem formstabilen Kunststoff gebildet, beispielsweise einem glasfaserverstärkten Polyamid und stellt zur Aufnahme des Anhängermoduls einen Volumenraum bereit. Der Gehäusedeckel samt einstückig damit ausgebildeter Tülle ist aus einem elastischen Kunststoffmaterial gebildet. Unter Krafteinwirkung kann sich das elastische Kunststoffmaterial des Gehäusedeckels wasserabdichtend an die Gehäusekammer anlegen.

Für die wasserdichte Anlegung des Gehäusedeckels an die Gehäusekammer dient der Haltering. Dieser trägt Rasthaken, die im bestimmungsgemäßen Verwendungsfall mit einem Anschlag der Gehäusekammer zusammenwirken, der gehäusedeckelseitig umlaufend an der Gehäusekammer angeordnet ist. Zur Verrastung der Rasthaken des Halterings mit der Gehäusekammer dienen zu den Rasthaken des Halterings korrespondierend ausgebildete Vertiefungen, die vom umlaufenden Anschlag der Gehäusekammer bereitgestellt sind.

Der Gehäusedeckel ist seinerseits mit einem umlaufenden Fortsatz in Form eines Ansatzflansches ausgerüstet, wobei der Ansatzflansch korrespondierend zum Anschlag des Gehäusedeckels ausgebildet ist. Im bestimmungsgemäßen Verwendungsfall liegt der Ansatzflansch des Gehäusedeckels am Anschlag der Gehäusekammer an. Der Haltering umgreift gehäusekammerseitig den Gehäusedeckel, legt diesen also relativ gegenüber der Gehäusekammer fest, wobei zur Lagesicherung des Halterings die vom Haltering bereitgestellten Rasthaken in die vom umlaufenden Anschlag der Gehäusekammer bereitgestellten Vertiefungen eingreifen.

Aufgrund der vorbeschriebenen Anordnung wird zum einen eine Lagefixierung des Gehäusedeckels gegenüber der Gehäusekammer erreicht sowie andererseits ein Anpressen des aus einem elastischen Kunststoffmaterial gebildeten Ansatzflansches des Gehäusedeckels am Anschlag der Gehäusekammer sichergestellt, womit die wasserdichte Anordnung des Gehäusedeckels an der Gehäusekammer gewährleistet ist.

Die vorbeschriebene Konstruktion erweist sich in zweierlei Hinsicht als vorteilhaft. Zum einen ist eine endfertige Montage in denkbar einfacher Weise möglich. Nach einem Einsetzen des Anhängermoduls in den von der Gehäusekammer bereitgestellten Volumenraum ist die Gehäusekammer durch Aufsetzen des Gehäusedeckels zu verschließen. Dabei ist der Gehäusedeckel bis zum Anliegen am gehäusekammerseitigen Anschlag über die Gehäusekammer zu stülpen. Eine verwenderseitige Fehlbedienung ist insoweit ausgeschlossen. Alsdann ist in einem zweiten und letzen Montageschritt der Haltering zu befestigen. Dies geschieht in einfacher Weise dadurch, dass dieser mit seinen Rasthaken voran über den Gehäusedeckel gestülpt wird, bis die vom Haltering getragenen Rasthaken mit ihren Rastnasen in die vom Anschlag der Gehäusekammer bereitgestellten Vertiefungen einrasten. In dieser Stellung stützt sich der Haltering mit seinen Rasthaken unter Zwischenordnung des Ansatzflansches des Gehäusedeckels am umlaufenden Anschlag der Gehäusekammer ab. Dabei sind die Rasthaken des Gehäusedeckels und die hierzu korrespondierend ausgebildeten Vertiefungen der Gehäusekammer in ihren geometrischen Abmessungen derart aufeinander abgestimmt, dass es zu einer elastischen Verformung des Kunststoffmaterials kommt, aus dem der Gehäusedeckel besteht. Aufgrund dieser elastischen Verformung wirkt nach einem bestimmungsgemäßen Einrasten der Rasthaken in die korrespondierend hierzu ausgebildeten Vertiefungen eine federelastische Rückstellkraft auf die Gehäusekammer beziehungsweise den Gehäusedeckel ein. Infolgedessen kommt es zu einer dauerhaft sicheren und wasserdichten Anordnung des Gehäusedeckels an der Gehäusekammer.

Ein weiterer Vorteil der erfindungsgemäßen Ausgestaltung liegt zum anderen in der wasserdichten Anordnung des Gehäusedeckels an der Gehäusekammer, die aufgrund des vorbeschriebenen Konstruktionsprinzips auch dauerhaft beständig ist. Die federelastischen Eigenschaften des Kunststoffmaterial aus dem der Gehäusedeckel gebildet ist einerseits und die geometrischen Abmessungen der Rasthaken und der hierzu korrespondierend ausgebildeten Vertiefungen andererseits sind in der Weise aufeinander abgestimmt, dass auch altersbedingte Materialermüdungen insbesondere hinsichtlich des elastischen Kunststoffmaterials ausgeglichen werden können. Im Ergebnis steht eine auch dauerhaft wasserdichte Anordnung des Gehäusedeckels an der Gehäusekammer, und dies bei gleichzeitig einfacher Montage.

Zur Fixierung des jeweiligen Rasthakens in Querrichtung ist gemäß einem weiteren Merkmal der Erfindung vorgesehen, dass die Vertiefungen mit dem jeweiligen Rasthaken im bestimmungsgemäßen Verwendungsfall zusammenwirkende Anschlagflächen bereitstellen. Dabei kann vorgesehen sein, dass die Anschlagflächen konisch verjüngt aufeinander zulaufen, und zwar ausgehend vom deckelseitigen Randabschnitt des Anschlages in Richtung auf den deckelentfernten Randabschnitt des Anschlages. Diese konische Ausgestaltung bewirkt eine zusätzliche Zentrierung sowohl der Rasthaken zur jeweiligen Vertiefung als auch des gesamten Halterings relativ gegenüber der Gehäusekammer beziehungsweise dem Gehäusedeckel.

Die Gehäusekammer verfügt gemäß einem weiteren Merkmal der Erfindung über eine zumindest abschnittsweise verdickte Kammerwandung. Dabei dient diese Verdickung dazu, einen einseitig offenen Schlitz aufzunehmen beziehungsweise bereitzustellen, in den zur Befestigung des Gehäuses beispielsweise an einem Zugfahrzeug ein Halteelement beispielsweise in Form eines Metallstreifens eingebracht werden kann. Ein solcher Metallstreifen, auch Haltezunge genannt, kann in den einseitig offenen Schlitz der Gehäusekammer eingeklebt sein. Er stellt seinerseits anderendseitig bevorzugterweise eine Bohrung bereit, die ein Verschrauben mit dem Zugfahrzeug gestattet.

Alternativ zur Metallzunge kann auch vorgesehen sein, die Gehäusekammer als solche durch Kleben am Zugfahrzeug anzuordnen.

Weitere Merkmale und Vorteile der Erfindung ergeben sich aus der nachfolgenden Beschreibung anhand der Figuren. Dabei zeigen:
- Fig. 1: in schematischer Perspektivdarstellung ein Gehäuse nach der Erfindung;
- Fig. 2: in schematisch perspektivischer Explosionsdarstellung ein Gehäuse nach der Erfindung;
- Fig. 3: das Gehäuse nach Fig. 2 in einer schematischen Frontansicht;
- Fig. 4: das Gehäuse nach Fig. 3 in einer schematischen Schnittdarstellung gemäß Schnittlinie IV-IV nach Fig. 3;
- Fig. 5: das Gehäuse nach Fig. 1 in einer schematischen Frontansicht;
- Fig. 6: das Gehäuse nach Fig. 5 in einer schematischen Schnittdarstellung gemäß Schnittlinie VI-VI nach Fig. 5 und
- Fig. 7: das Gehäuse nach Fig. 6 in einer schematischen Ausschnittsdarstellung gemäß Ausschnitt VII nach Fig. 6.

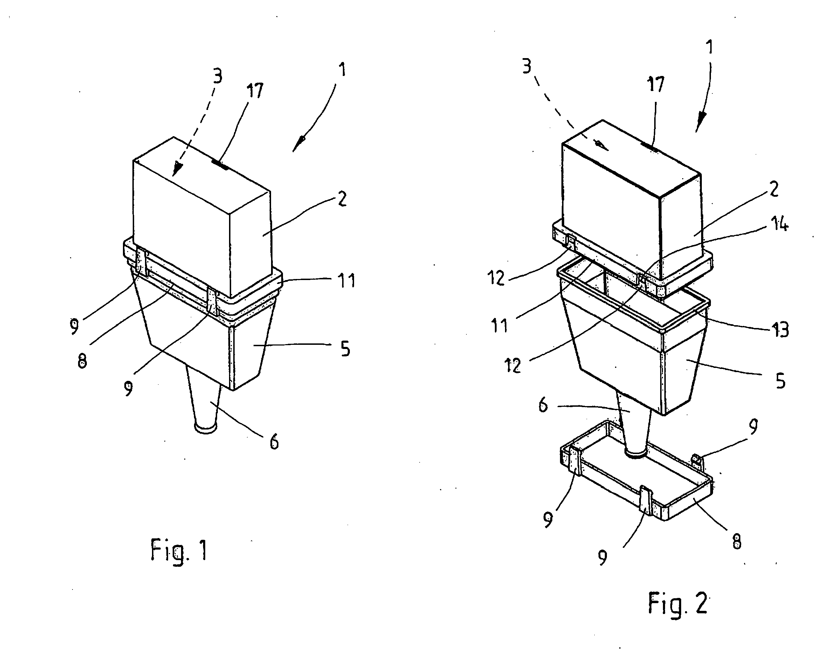

Die Figuren 1 bis 6 lassen das erfindungsgemäße Gehäuse 1 in unterschiedlichen Ansichten erkennen.

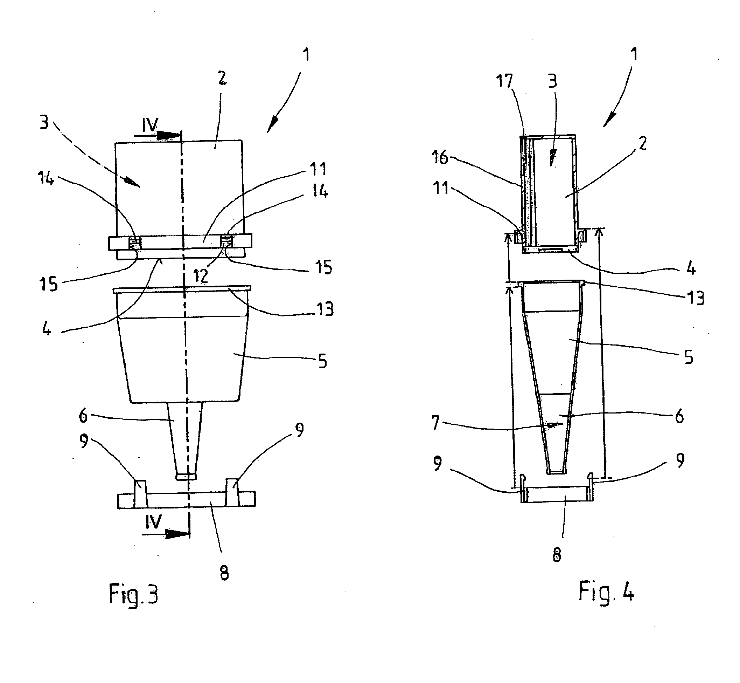

Wie sich insbesondere aus der Darstellung nach den Figuren 2 und 3 ergibt, verfügt das erfindungsgemäße Gehäuse 1 über eine Gehäusekammer 2, einen Gehäusedeckel 5 sowie einen Haltering 8.

Die Gehäusekammer 2 ist aus einem formstabilen Kunststoff gebildet, beispielsweise einem glasfaserverstärkten Polyamid und stellt den eigentlichen Volumenraum 3 zur Aufnahme eines in den Figuren nicht näher darstellten Anhängermoduls bereit. Dabei ist der Volumenraum 3 über eine gehäusedeckelseitig 5 ausgebildete Beschickungsöffnung 4 der Gehäusekammer 2 zugänglich.

Zum Verschließen der Beschickungsöffnung 4 der Gehäusekammer 2 dient der Gehäusedeckel 5. Dieser ist aus einem elastischen Kunststoffmaterial gebildet. Einstückig mit dem Gehäusedeckel 5 ausgebildet ist eine Tülle 6, die der wasserdichten Abführung von an einem in den Figuren nicht näher dargestellten Anhängermodul angeschlossenen Kabeln dient. Zu diesem Zweck stellt die Tülle 6 einen Durchgang 7 bereit, der ausgangsseitig mit einer Dichtungswulst abschließt. Typischerweise sind die von einem Anhängermodul abgehenden Kabel innerhalb eines Isolierschlauches angeordnet, der im Außendurchmesser etwas größer als der Ausgangsdurchmesser der Tülle 6 bemessen ist. Im Ergebnis liegt das elastische Kunststoffmaterial der Tülle 6 wasserabdichtend an dem die elektrischen Kabel aufnehmenden Isolierschlauch an.

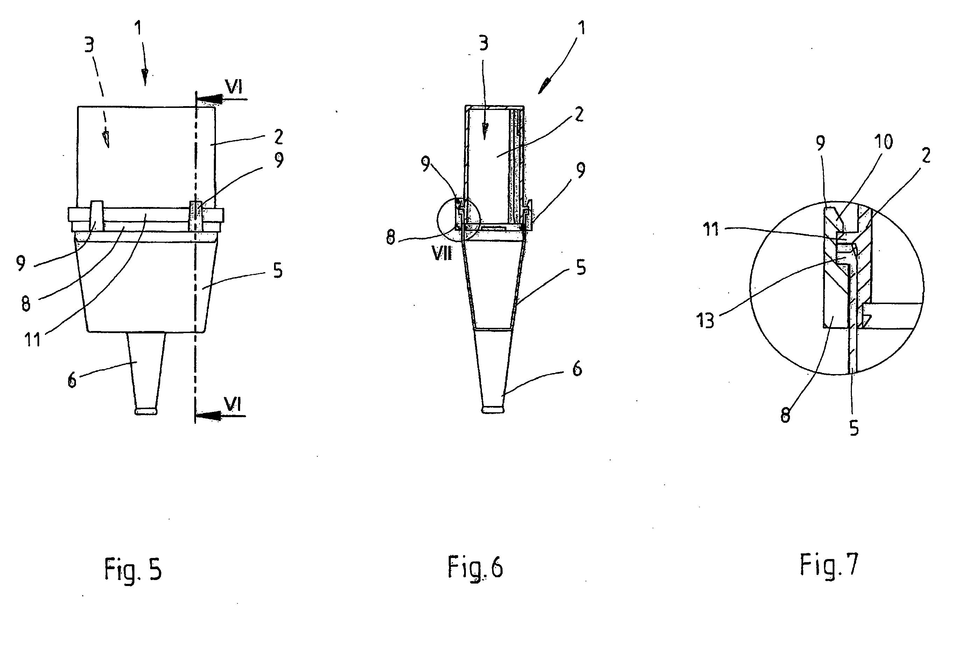

Wie insbesondere die Ausschnittsdarstellung nach Fig. 7 erkennen lässt, stellt die Gehäusekammer 2 gehäusedeckelseitig einen umlaufenden Anschlag 11 bereit. Mit diesem Anschlag 11 wirkt im bestimmungsgemäßen Verwendungsfall ein vom Gehäusedeckel 5 bereitgestellter Ansatzflansch 13 zusammen, der als umlaufender Rand ausgebildet ist. Im bestimmungsgemäßen Verwendungsfall liegt der Ansatzflansch 13 wasserabdichtend am Anschlag 11 an.

Zur Lagefixierung und dauerhaft wasserabdichtenden Anordnung des Gehäusedeckels 5 an der Gehäusekammer 2 dient der Haltering 8. Dieser stellt vier Rasthaken 9 bereit, die halteringentfernt über jeweils eine Rastnase 10 verfügen. Die Rasthaken 9 wirken mit Vertiefungen 12 zusammen, die vom Anschlag 11 der Gehäusekammer 2 bereitgestellt sind. Diese Vertiefungen 12 verfügen, wie insbesondere Fig. 3 zu entnehmen ist, über einen mit Bezug auf die Zeichnungsebene nach Fig. 3 horizontal verlaufenden Steg 14 sowie Anschlagflächen 15, die mit Bezug auf die Zeichnungsebene nach Fig. 3 konisch zueinander verlaufend ausgerichtet sind.

Im bestimmungsgemäßen Endmontagefall, wie er sich insbesondere aus den Figuren 1, 5 und 6 ergibt, liegt der Gehäusedeckel 5 an der Gehäusekammer 2 an, wobei der Ansatzflansch 13 und der Anschlag 11 in Kontaktberührung stehen. Der Haltering 8 stützt sich unter Zwischenordnung des Ansatzflansches 13 gegenüber dem Anschlag 11 der Gehäusekammer 2 ab, wobei aufgrund der federelastischen Verformung des den Ansatzflansch 13 bildenden Kunststoffmaterials eine dauerhafte Presskraft zwischen Anschlag 11 einerseits und Ansatzflansch 13 andererseits ausgebildet ist, infolgedessen es im Bereich der Kontaktfläche zwischen Ansatzflansch 13 und Anschlag 11 zu einer wasserdichten Anordnung des Gehäusedeckels 5 an der Gehäusekammer 2 kommt.

Die Montage des erfindungsgemäßen Gehäuses 1 ergibt sich insbesondere aus einer Zusammenschau der Figuren 3 und 4. Nach einem Einbringen des in den Figuren nicht näher dargestellten Anhängermoduls in den von der Gehäusekammer 2 bereitgestellten Volumenraum 3 ist der Gehäusedeckel 5 über den gehäusedeckelseitigen Rand der Gehäusekammer 2 zu stülpen bis der Ansatzflansch 13 des Gehäusedeckels 5 am Anschlag 11 der Gehäusekammer 2 zu liegen kommen. Alsdann ist der Haltering 8 mit seinen Rasthaken 9 voran über die Tülle 6 und den Gehäusedeckel 5 zu stülpen, bis er unter Zwischenordnung des elastisch verformten Ansatzflansches 13 mit seinen Rasthaken 9 in die Vertiefungen 12 des Anschlages 11 der Gehäusekammer 2 einrastend verankert ist.

Ein Lösen des Halterings 8 im Falle der Demontage ist einfacher Weise möglich. Zu diesem Zweck sind die Rasthaken rastnasenseitig zu ergreifen und soweit gegenüber der Gehäusekammer 2 auszufedern, das heißt entgegen der durch das Kunststoffmaterial bewirkten elastischen Federkraft zu verschwenken, dass der durch die Rasthaken 9 bedingte Hinterschnitt aufgelöst, das heißt der Anschlag 11 freigegeben wird. Alsdann kann der Haltering 8 abgezogen und sodann der Gehäusedeckel 5 von der Gehäusekammer 2 gelöst werden.

Wie im Übrigen insbesondere die Darstellung nach Fig. 1 erkennen lässt, umgreift der Haltering 8 den Gehäusedeckel 5 und damit auch die Gehäusekammer 2 umlaufend. Hierdurch bedingt ist ein lagesicherer und fixierter Sitz des Gehäusedeckels 5 gegenüber der Gehäusekammer 2 sichergestellt.

Wie die Darstellung nach Fig. 4 erkennen lässt, ist eine der Kammerwandungen 16 der Gehäusekammer verdickt ausgebildet, und zwar in ihrem gehäusedeckelentfernten Abschnitt. Diese Verdickung dient dazu, einen einseitig offenen Schlitz 17 auszubilden, der zum Zwecke der Befestigung des Gehäuses 1 an einem Widerlager, beispielsweise einem Montageblech eines Kraftfahrzeuges, einen Metallstreifen aufnehmen kann. Dieser Metallstreifen kann in den einseitig offenen Schlitz 17 eingeklebt sein und anderendseitig eine Bohrung zur Aufnahme einer Schraube aufweisen.

### Bezugszeichenliste

- 1: Gehäuse
- 2: Gehäusekammer
- 3: Volumenraum
- 4: Beschickungsöffnung
- 5: Gehäusedeckel
- 6: Tülle
- 7: Durchgang
- 8: Haltering
- 9: Rasthaken
- 10: Rastnase
- 11: Anschlag
- 12: Vertiefungen
- 13: Ansatzflansch
- 14: Steg
- 15: Anschlagflächen
- 16: Kammerwandung
- 17: Schlitz

## Patentansprüche

1. Gehäuse (1) zur Aufnahme eines Anhängermoduls, mit einer Gehäusekammer (2), die zur Aufnahme des Anhängermoduts einen Volumenraum (3) bereitstellt, mit einem Gehäusedeckel (5), der eine Tülle (6) aufweist, wobei der Gehäusedeckel (5) und die Tülle (6) einstückig aus einem elastischen Kunststoffmaterial gebildet sind, **dadurch gekennzeichnet, dass** das Gehäuse einen Haltering (8) aufweist, der gehäusekammerseitig Rasthaken (9) trägt, wobei die Gehäusekammer (2) gehäusedeckelseitig einen umlaufenden Anschlag (11) aufweist, der zu den Rasthaken (9) des Halterings (8) korrespondierende Vertiefungen (12) trägt und wobei der Gehäusedeckel (5) gehäusekammerseitig einen umlaufenden und zum Anschlag (11) der Gehäusekammer (2) korrespondierend ausgebildeten Ansatzflansch (13) aufweist.

2. Gehäuse nach Anspruch 1, **dadurch gekennzeichnet, dass** der Ansatzflansch (13) des Gehäusedeckels (5) im bestimmungsgemäßen Verwendungsfall am Anschlag (11) der Gehäusekammer (2) anliegt.

3. Gehäuse nach Anspruch 1 oder 2, **dadurch gekennzeichnet, dass** sich der Haltering (8) im bestimmungsgemäßen Verwendungsfall unter Zwischenordnung des Ansatzflansches (13) des Gehäusedeckels (5) am Anschlag (11) der Gehäusekammer (2) abstützt.

4. Gehäuse nach einem der vorhergehenden Ansprüche, **dadurch gekennzeichnet, dass** die Vertiefungen (12) zur Fixierung des jeweiligen Rasthakens (9) in Querrichtung mit dem jeweiligen Rasthaken (9) im bestimmungsgemäßen Verwendungsfall zusammenwirkende Anschlagflächen (15) bereitstellen.

5. Gehäuse nach einem der vorhergehenden Ansprüche, **dadurch gekennzeichnet, dass** die Gehäusekammer (2) eine zumindest abschnittsweise verdickte Kammerwandung (16) aufweist.

6. Gehäuse nach Anspruch 5, **dadurch gekennzeichnet, dass** die verdickte Kammerwandung (16) einen einseitig offenen Schlitz (17) trägt.

7. Gehäuse nach einem der vorhergehenden Ansprüche, **dadurch gekennzeichnet, dass** die Gehäusekammer (2) aus glasfaserverstärktem Polyamid gebildet ist.

## Claims

1. A housing (1) for receiving a trailer module, comprising a housing chamber (2) which provides a volume space (3) for receiving the trailer module and comprising a housing cover (5) which comprises a bushing (6), wherein the housing cover (5) is integrally formed with the bushing (6) and made of elastic plastic material, **characterized in that** the housing comprises a retaining ring (8) which carries snap-in hooks (9) on the side of the housing chamber, wherein the housing chamber (2) comprises a circumferential stop (11) on the side of the housing cover, which stop comprises recesses (12) that correspond to the snap-in hooks (9) of the retaining ring (8), and wherein the housing cover (5) comprises, on the side of the housing chamber, a circumferential union flange (13) that is designed correspondingly to the stop (11) of the housing chamber (2).

2. A housing according to claim 1, **characterized in that** the union flange (13) of the housing cover (5), if used as intended, sits close on the stop (11) of the housing chamber (2).

3. A housing according to claim 1 or 2, **characterized in that** the retaining ring (8), if used as intended, rests on the stop (11) of the housing chamber (2) with interposition of the union flange (13) of the housing cover (5).

4. A housing according to one of the preceding claims, **characterized in that** the recesses (12) provide stop surfaces (15) which during the intended use cooperate with the respective snap-in hook (9) for fixing the respective snap-in hook (9) in the transverse direction.

5. A housing according to one of the preceding claims, **characterized in that** the housing chamber (2) comprises a chamber wall (16) that is thickened in at least some sections.

6. A housing according to claim 5, **characterized in that** the thickened chamber wall (16) carries a slot (17) that is open towards one side.

7. A housing according to one of the preceding claims, **characterized in that** that housing chamber (2) is made of glass fiber reinforced polyamide.

## Revendications

1. Boîtier (1) destiné à recevoir un module de remorque, comprenant une chambre de boîtier (2) qui fournit un espace de volume (3) destiné à recevoir le module de remorque et comprenant un couvercle de boîtier (5) qui comprend une douille (6), le couvercle de boîtier (5) et la douille (6) étant solidaires et en une matière plastique élastique, **caractérisé en ce que** le boîtier comprend une bague de retenue (8) qui porte des crochets d'encliquetage (9) du côté de la chambre de boîtier, la chambre de boîtier (2) comprenant une butée circonférentielle (11) du côté du couvercle de boîtier, laquelle butée comprend des évidements (12) correspondant aux crochets d'encliquetage (9) de la bague de retenue (8), le couvercle de boîtier (5) comprenant, du côté de la chambre de boîtier, une bride de liaison (13) circonférentielle configurée de façon à correspondre à la butée (11) de la chambre de boîtier (2).

2. Boîtier selon la revendication 1, **caractérisé en ce que** la bride de liaison (13) du couvercle de boîtier (5) est adjacente à la butée (11) de la chambre de boîtier (2) en cas d'utilisation correcte.

3. Boîtier selon la revendication 1 ou la revendication 2, **caractérisé en ce qu'**en cas d'utilisation correcte la bague de retenue (8) s'appuie sur la butée (11) de la chambre de boîtier (2) avec interposition de la bride de liaison (13) du couvercle de boîtier (5).

4. Boîtier selon l'une des revendications précédentes, **caractérisé en ce que** les évidements (12) fournissent des surfaces de butée (15) qui coopèrent en cas d'utilisation correcte avec le crochet d'encliquetage (9) respectif pour fixer le crochet d'encliquetage (9) dans la direction transversale.

5. Boîtier selon l'une des revendications précédentes, **caractérisé en ce que** la chambre de boîtier (2) comprend une paroi de chambre (16) dont au moins quelques sections comportent une épaisseur plus élevée.

6. Boîtier selon la revendication 5, **caractérisé en ce que** la paroi de chambre plus épaisse (16) porte une fente (17) qui est ouverte sur un côté.

7. Boîtier selon l'une des revendications précédentes, **caractérisé en ce que** la chambre de boîtier (2) est en polyamide renforcée par fibres de verre.
